# EUROPÄISCHE PATENTSCHRIFT

(11) **EP 1 894 763 B1**
(45) Veröffentlichungstag und Bekanntmachung des Hinweises auf die Patenterteilung: **17.11.2010**
(21) Anmeldenummer: 07012882.2
(22) Anmeldetag: 11.07.2007
(51) Int. Cl.: B60K 13/00, B62D 21/00

(54) **Befestigungsvorrichtung für eine Fahrzeugkomponente**
Mounting device for a vehicle component
Dispositif de fixation pour un composant de véhicule

(30) Priorität: 01.09.2006 DE 102006041105
(43) Veröffentlichungstag der Anmeldung: 05.03.2008
(73) Patentinhaber: AUDI AG, 85045 Ingolstadt (DE)
(72) Erfinder: Graf, Andreas, 74232 Abstatt (DE); Stegmaier, Jürgen, 71737 Kirchberg (DE); Hackmayer, Steffen, 74889 Sinsheim (DE); Kroll, Matthias, 67273 Dackenheim (DE); Zeitler, Volker, 67125 Dannstadt-Schauernheim (DE)
(74) Vertreter: Patzelt, Heike Anna Maria

(56) Entgegenhaltungen:
- EP-A- 1 528 231
- DE-A1- 3 617 962
- DE-A1-102004 033 552
- FR-A- 2 266 095

## Beschreibung

Die Erfindung betrifft eine Befestigungsvorrichtung für eine Fahrzeugkomponente, mit einem Befestigungselement, welches fest mit der Fahrzeugkomponente verbunden ist.

Die EP 1 528 231 A1 beschreibt eine Wärmeisolationsbaugruppe mit einer Wärmeisolationsplatte zum Abschirmen von Wärme eines Abgaskrümmers. Hierbei ist ein mit dem Abgaskrümmer verschraubter Schraubbolzen durch ein Kragenstück hindurchgeführt. Das Kragenstück ist in Längsrichtung des Bolzens gesehen auf der Höhe der Wärmeisolationsplatte angeordnet, wobei ein Außendurchmesser des Kragenstücks kleiner ist als eine lichte Weite einer Aussparung in der Wärmeisolationsplatte. Ein aus zwei Beilagscheiben gebildetes Federelement ist einerseits in eine in dem Kragenstück ausgebildete umlaufende Nut eingebracht und andererseits an der Wärmeisolationsplatte befestigt. Durch die Federwirkung des Federelements kann der Bolzen sich beim Schwingen des Abgaskrümmers relativ zu der Wärmeisolationsplatte bewegen.

Die DE 10 2004 033 552 A1 beschreibt eine Wärmeisolationsbaugruppe, welche derjenigen der EP 1 528 231 A1 ähnlich ist. Hierbei ist jedoch die Wärmeisolationsplatte in Längsrichtung des Bolzens gesehen zwischen zwei umlaufenden Flanschen des Kragenstücks angeordnet. In einem Spalt, welcher zwischen den beiden Flanschen des Kragenstücks ausgebildet ist, stützt sich eine erste Schraubenfeder an der Außenseite der Wärmeisolationsplatte und einem der Flansche ab. Eine zweite Schraubenfeder ist an der Innenseite der Wärmeisolationsplatte und dem zweiten Flansch abgestützt. Durch die beiden Schraubenfedern kann sich das Kragenstück relativ zu der Wärmelsolationsplatte bewegen.

Die DE 36 17 962 A1 beschreibt eine Klemmvorrichtung zur Halterung eines Kunststoff-Kühlergitters an einer Frontplatte eines Fahrzeugs. Eine Lasche des Kunststoff-Kühlergitters erstreckt sich mit einem Luftspiel durch eine Öffnung in der Frontplatte. Eine schlaufenförmige Spreizfeder weist einen Schenkel auf, welcher durch eine Bohrung in der Lasche hindurchgeführt ist, während sich ein zweiter Schenkel der Spreizfeder an einer Rückseite der Frontplatte abstützt.

In Fahrzeugen müssen eine Vielzahl von Komponenten gelagert und befestigt werden. Unter anderem sind auch Komponenten eines Fahrzeugs zu befestigen, welche im Betrieb des Fahrzeugs Erschütterungen ausgesetzt sind und somit fortwährend einer Bewegung unterliegen. Gerade bei diesen Komponenten ist es oftmals relativ schwierig eine einerseits zuverlässige und andererseits verschleißarme Befestigung gewährleisten zu können.

Daher ist es Aufgabe der vorliegenden Erfindung, eine Befestigungsvorrichtung für eine Fahrzeugkomponente zu schaffen, bei dem eine diesbezügliche Befestigung zuverlässig und verschleißarm erfolgen kann.

Diese Aufgabe wird durch eine Befestigungsvorrichtung, welche die Merkmale nach Patentanspruch 1 aufweist, gelöst.

Eine erfindungsgemäße Befestigungsvorrichtung für eine Fahrzeugkomponente umfasst zumindest ein Befestigungselement, welches mit der Fahrzeugkomponente verbunden ist sowie ein Halteelement und eine Abstützwand. Das Befestigungselement ist mit einem fest an der Karosserie angeordneten Halteelement verbunden, wobei sich das Befestigungselement sich durch das Haltelement und die Abstützwand erstreckt, welche Abstützwand in Längsrichtung des Befestigungselements zwischen dem Halteelement und der Fahrzeugkomponente angeordnet ist. Die Abstützwand weist eine Aussparung auf, welche eine lichte Weite aufweist, so dass sich das Befestigungselement mit einem Luftspiel durch die Aussparung erstreckt. Insbesondere bei der Befestigung von sich im Betrieb des Fahrzeugs bewegenden Fahrzeugkomponenten kann dadurch eine Befestigung erreicht werden, welche zuverlässig und verschleißarm erfolgen kann. Durch eine Dimensionierung der Aussparung, welche ein Hindurcherstrecken des Befestigungselements mit einem randseitigen Spiel und somit mit einer beabstandeten Anordnung zu dem inneren Rand der Aussparung ermöglicht, kann dies gewährleistet werden. Bei einer Bewegung der Fahrzeugkomponente kann dadurch auch die Befestigungsvorrichtung und insbesondere das Befestigungselement, welches insbesondere fest mit der Fahrzeugkomponente verbunden ist, die Bewegung der Fahrzeugkomponente auch durchführen und unterliegt dabei einem geringeren Verschleiß.

Bevorzugt ist die Befestigungsvorrichtung relativ bewegbar zur Abstützwand angeordnet. Insbesondere ist die Befestigungsvorrichtung in zwei Raumrichtungen relativ bewegbar zur Abstützwand angeordnet. Die Befestigungsvorrichtung und zumindest Teilelemente davon sind bevorzugt unmittelbar mit dieser Abstützwand verbunden und können sich relativ zu der Abstützwand bewegen. Die Stabilisierung der Befestigung kann dadurch nochmals erhöht werden ohne die Bewegungsfreiheit einzuschränken.

Das Befestigungselement ist bevorzugt als stiftartiges Teil ausgebildet, welches insbesondere ein Bolzen ist. Die Befestigungsvorrichtung umfasst des Weiteren ein Abdichtelement, welches relativ bewegbar zum stiftartigen Teil angeordnet ist und an der Abstützwand anliegt. Bevorzugt erstreckt sich das stiftartige Teil durch eine Öffnung des Abdichtelements und das Abdichtelement ist in Längsrichtung des stiftartigen Teils relativ dazu bewegbar angeordnet. Durch diese Ausgestaltung kann einerseits gewährleistet werden, dass das Befestigungselement mit einem ausreichenden Luftspiel in der Aussparung der Abstützwand bewegt werden kann und darüber hinaus das Abdichtelement diese vergrößerte Aussparung abdeckt. Indem sowohl das Befestigungselement relativ zur Abstützwand als auch das Abdichtelement relativ bewegbar zur Abstützwand und dem Befestigungselement bewegbar ist, kann die Flexibilität der Vorrichtung im Hinblick auf eine zuverlässige Befestigung und eine verschleißarme Anordnung nochmals erhöht werden.

Bevorzugt ist das Abdichtelement federbelastet an der Abstützwand anliegend angeordnet. Durch diese Ausgestaltung kann im Allgemeinen stets gewährleistet werden, dass bei einer relativen Bewegung der einzelnen Teile zueinander das Abdichtelement stets zuverlässig an die Abstützwand angedrückt wird. Die Abdichtung der Aussparung kann dadurch zuverlässig gewährleistet werden.

Bevorzugt erstreckt sich das stiftartige Teil bereichsweise in einer Führungshülse, an deren Außenseite das Abdichtelement umlaufend und relativ bewegbar zur Führungshülse angeordnet ist. Ein unmittelbarer Kontakt zwischen dem Abdichtelement und dem stiftartigen Teil kann dadurch verhindert werden und Verschleißerscheinungen aufgrund der relativen Beweglichkeit der beiden Teile zueinander können dadurch verhindert werden.

Bevorzugt ist auch die Feder, welche zum Vorspannen des Abdichtelements ausgebildet ist, an der Außenseite der Führungshülse angeordnet.

Bevorzugt ist das Abdichtelement scheibenförmig ausgebildet und an einer der Fahrzeugkomponente abgewandten Außenseite der Abstützwand anliegend. Das Abdichtelement ist bevorzugt so konzipiert, dass im Wesentlichen die gesamte Aussparung der Abstützwand bedeckt ist. Leckageverluste von Gasströmungen durch die Aussparung nach außen können dadurch verhindert werden.

Bevorzugt ist die Fahrzeugkomponente ein Element, welches zur Führung von Abgas ausgebildet ist. Das Abgas wird insbesondere von einem Motor des Fahrzeugs erzeugt. Als Abgas führendes Element kann die gesamte Abgasanlage, beispielsweise umfassend Krümmerelemente, Katalysator, Endschalldämpfer sowie Endrohre umfasst sein. Es können jedoch auch nur einzelne Komponenten davon umfasst sein, welche mit der Befestigungsvorrichtung befestigt angeordnet werden.

Bevorzugt ist die Abstützwand einer die Fahrzeugkomponente zumindest bereichsweise abdeckende Wärmeabschirmungseinrichtung zugeordnet. Insbesondere bei dieser Ausgestaltung kann ein Abgas führendes Element zuverlässig und verschleißarm befestigt werden und dennoch die im Betrieb des Fahrzeugs auftretenden relativen Bewegungen durchführen, ohne dass die Befestigung schnell verschleißen würde. Darüber hinaus kann durch das Abdichtelement die relativ große Aussparung zuverlässig auch bei relativen Bewegungen der einzelnen Elemente zueinander gewährleistet werden. Dadurch kann verhindert werden, dass von der Abgasanlage abgestrahlte heiße Luft durch die Aussparung aus der Wärmeabschirmungseinrichtung nach außen tritt und umliegende Bauteile in ihrer Funktion beeinträchtigt oder beschädigt werden. Insbesondere durch eine derartige Kapselung des abgasführenden Elements mit einer derartigen Wärmeabschirmungseinrichtung entstehen im Wesentlichen im oberen Bereich dieser Wärmeabschirmeinrichtung relativ hohe Temperaturen.

Indem bevorzugt eine Abdichtscheibe auf einen bewegten Bolzen oder eine bewegte Welle aufgeschoben ist, wird bevorzugt mittels einer Schraubenfeder diese Abdichtscheibe vorgespannt und auf die Rohbau fest angeordnete Wärmeabschirmung gedrückt. Dadurch wird eine Abdichtung der Aussparung beziehungsweise des Freigangslochs in der Abstützwand beziehungsweise der Wärmeabschirmung erzielt und gleichzeitig die Bewegungsfreiheit des Befestigungselements aufrecht erhalten.

Bevorzugt kann somit eine Bewegungsfreiheit dahingehend gewährleistet werden, dass das Abdichtelement in Längsrichtung des als stiftartigen Teils ausgebildeten Befestigungselements und somit in einer ersten Raumrichtung relativ bewegbar angeordnet ist. Dadurch entsteht eine axiale Relativbewegung zwischen diesem Befestigungselement und dem Abdichtelement. Darüber hinaus kann auch eine relative Bewegung zwischen dem Abdichtelement und der Abstützwand erreicht werden, welche im Wesentlichen in radialer Richtung der Aussparung ermöglicht ist. Die beiden Richtungen der Relativbewegungen sind daher im wesentlichen vertikal zueinander orientiert. Die Bewegungsfreiheit kann dadurch sehr hoch gehalten werden.

Bevorzugt ist die Abstützwand und insbesondere die gesamte Wärmeabschirmungseinrichtung fest an der Karosserie des Fahrzeugs angeordnet. Die positionsstabile Anordnung kann dadurch gewährleistet werden.

Das Halteelement ist zumindest bereichsweise elastisch ausgebildet. Insbesondere kann vorgesehen sein, dass im Bereich in dem das Befestigungselement sich durch das Halteelement hindurch erstreckt, ein elastischer Teilbereich, insbesondere aus Gummi ausgebildet ist. Das Befestigungselement kann dadurch relativ bewegbar in dem Halteelement gelagert werden. Auch dadurch kann die Bewegungsfreiheit nochmals erhöht werden und dennoch die Reduzierung des Verschleißes gewährleistet werden. Insbesondere kann vorgesehen sein, dass das fest an der Karosserie angeordnete Halteelement über elastische Pufferelemente an der Karosserie angeordnet ist.

Ein Ausführungsbeispiel der Erfindung wird nachfolgend anhand schematischer Zeichnungen näher erläutert. Es zeigen:
- Fig. 1: eine Schnittdarstellung durch ein Ausführungsbeispiel einer erfindungsgemäßen Befestigungsvorrichtung; und
- Fig. 2: eine perspektivische Darstellung der Ausführung gemäß Fig. 1.

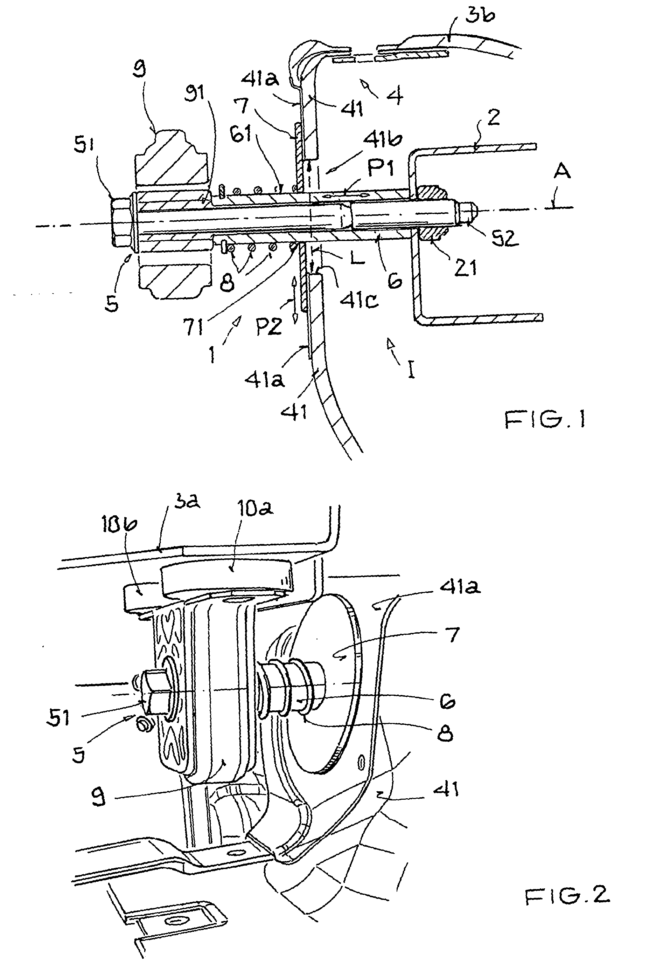

In Fig. 1 ist eine Schnittdarstellung einer Befestigungsvorrichtung 1 gezeigt, welche zur Befestigung einer als Abgasanlage 2 ausgebildeten Fahrzeugkomponente ausgebildet ist. Die Abgasanlage 2 unterliegt im Betrieb des Fahrzeugs im Wesentlichen stetigen Bewegungen und erwärmt sich durch die Abgasführung, welches Abgas von einem nicht dargestellten Motor des Fahrzeugs erzeugt wird. Die dadurch von der Abgasanlage 2 abgestrahlte Wärme erhitzt den Umgebungsbereich und insbesondere den Freiraum I. Im Ausführungsbeispiel ist die Abgasanlage 2 zumindest bereichsweise von einer Wärmeabschirmeinrichtung 4 umgeben beziehungsweise durch diese gekapselt. Dadurch soll verhindert werden, dass die erhitzte Abgasanlage 2 benachbart angeordnete weitere Komponenten des Fahrzeugs zu stark erhitzt und diese dadurch in ihrer Funktion beeinträchtigt oder beschädigt.

Die Wärmeabschirmungseinrichtung 4 ist an einem Teilelement 3b der Karosserie des Fahrzeugs positionsstabil befestigt. Die Befestigungsvorrichtung 1 ist an einem Teilelement 3a (Fig. 2) der Karosserie befestigt.

Die Befestigungsvorrichtung 1 umfasst ein als Bolzen 5 ausgebildetes Befestigungselement, welches einen Kopf 51 und einen Stift 52 aufweist. Dieser Bolzen 5 und insbesondere der Stift 52 sind bereichsweise von einer Führungshülse 6 umgeben. An der Außenseite der Führungshülse 6 ist ein als Abdichtscheibe 7 ausgebildetes Abdichtelement angeordnet. Die Abdichtscheibe 7 ist in Längsrichtung A des Bolzens 5 relativ zu diesem Bolzen 5 bewegbar angeordnet. Dazu ist an der Führungshülse 6 eine Schraubenfeder 8 angeordnet, welche an der Abdichtscheibe 7 anliegt und diese federbelastet vorspannt. Die relative Bewegbarkeit der Abdichtscheibe 7 zum Bolzen 5 ist durch den Pfeil P1 angedeutet.

Der Bolzen 5 erstreckt sich durch eine Bohrung 91 eines Halteelements 9. Das Halteelement 9 ist im Ausführungsbeispiel in einem Bereich der Bohrung 91 aus einem elastischen Material, insbesondere aus Gummi, ausgebildet. Dadurch kann der Bolzen 5 gedämpft gelagert werden und eine relative Bewegung zum Halteelement 9 ausführen.

Wie aus der Darstellung gemäß Fig. 1 zu erkennen ist, ist zwischen dem Halteelement 9 und der Abgasanlage 2 eine Abstützwand 41 der Wärmeabschirmungseinrichtung 4 angeordnet. Der Bolzen 5 erstreckt sich somit durch das Halteelement 9, durch eine Aussparung 41 b der Abstützwand 41 und in die Abgasanlage 2. In der Abgasanlage 2 ist der Stift 52 des Bolzens 5 in einem Befestigungsbereich 21 fest eingesteckt und somit fest mit der Abgasanlage 2 verbunden. Eine relative Bewegung zwischen dem Bolzen 5 und der Abgasanlage 2 kann dadurch im Wesentlichen verhindert werden.

Der Bolzen 5 und die Führungshülse 6 erstrecken sich durch eine Bohrung 71 der Abdichtscheibe 7. Die Abdichtscheibe 7 weist Ausmaße auf, welche größer sind als die lichte Weite L der Aussparung 41 b. Die Abdichtscheibe 7 deckt diese Aussparung 41 b somit vollständig ab, wobei die Abdichtscheibe 7 an einer Außenseite 41 a anliegt. Neben der Bewegung in Pfeilrichtung P1 kann die Abdichtscheibe 7 und auch der Bolzen 5 in einer dazu senkrecht orientierten Pfeilrichtung P2 relativ zur Abstützwand 41 bewegt werden.

Die lichte Weite L der Aussparung 41 b ist größer als der Außendurchmesser der Führungshülse 6 und zwar derart, dass die Führungshülse 6 beabstandet zum inneren Rand 41 c der Aussparung 41 b angeordnet ist. Der Bolzen 5 und die Führungshülse 6 erstrecken sich somit mit einem Luftspiel durch die Aussparung 41 b. Es kann auch vorgesehen sein, dass in dem Bereich des Luftspiels ein elastisches Element, insbesondere ein Gummiring, angeordnet ist. Dieses elastische Element ist dann bevorzugt so ausgebildet, dass die Bewegungsfreiheit des Bolzens 5 in Richtung P1 und P2 im Wesentlichen nicht eingeschränkt ist. Bevorzugt liegt das elastische Element an dem Randbereich 41 c und der Führungskurve 6 an.

Durch die Schraubenfeder 8 kann gewährleistet werden, dass die Abdicht**scheibe 7 auch bei einer relativen Bewegung zu der Führungshülse 6 und** dem Bolzen 5 einerseits und/oder zu der Abstützwand 4 andererseits im Allgemeinen stets abdichtend an der Außenseite 41a anliegt. Das Austreten von heißer Luft aus dem Freiraum I durch die Aussparung 41 b kann dadurch verhindert werden. Sowohl die Feder 8 als auch die Abdichtscheibe 7 liegen im Ausführungsbeispiel an der Außenseite 61 der Führungshülse 6 an.

In Fig. 2 ist eine perspektivische Darstellung der Befestigungsvorrichtung 1 gezeigt. Das Halteelement 9, welches im Bereich des Bolzens 5 und somit im Bereich der Bohrung 91 aus einem elastischen Material ausgebildet ist, ist im Übrigen aus einem festen stabilen Material, beispielsweise aus Leichtmetall oder Stahl, ausgebildet. Dieses Halteelement 9 ist im Ausführungsbeispiel über elastische Pufferelemente beziehungsweise Dämpfungselemente 10a und 10b an dem Teil 3a der Karosserie befestigt. Dadurch kann eine dämpfende Lagerung und Befestigung des Halteelements 9 an der Karosserie erreicht werden. Darüber hinaus ist die Abdichtscheibe 7 dargestellt, welche an der Außenseite 41 a der Abstützwand 41 anliegt.

## Patentansprüche

1. Befestigungsvorrichtung für eine Fahrzeugkomponente (2), mit einem Befestigungselement (5), welches mit der Fahrzeugkomponente (2) verbunden ist, mit einem Halteelement (9) und mit einer Abstützwand (41),
**dadurch gekennzeichnet, dass**
das Befestigungselement (5) mit einem fest an der Karosserie angeordneten Halteelement (9) verbunden ist, wobei sich das Befestigungselement (5) durch das Halteelement (9) und die Abstützwand (41) erstreckt, welche Abstützwand (41) in Längsrichtung (A) des Befestigungselements (5) zwischen dem Halteelement (9) und der Fahrzeugkomponente (2) angeordnet ist, und die Abstützwand (41) eine Aussparung (41 b) mit einer derartigen lichten Weite (L) aufweist, dass sich das Befestigungselement (5) mit einem Luftspiel zu einem Randbereich (41c) der Aussparung (41b) durch diese erstreckt, wobei eine Dimensionierung der Aussparung (41b) ein Hindurcherstrecken des Befestigungselements (5) mit einem randseitigen Spiel ermöglicht.

2. Befestigungsvorrichtung nach Anspruch 1, welche relativ bewegbar, insbesondere in zwei Raumrichtungen, zur Abstützwand (41) angeordnet ist.

3. Befestigungsvorrichtung nach Anspruch 1 oder 2, welche als Befestigungselement ein stiftartiges Teil, insbesondere einen Bolzen (5), und ein Abdichtelement (7) aufweist, welches relativ bewegbar zum stiftartigen Teil angeordnet ist und an der Abstützwand (41) anliegt.

4. Befestigungsvorrichtung nach Anspruch 3,
**dadurch gekennzeichnet, dass**
sich das stiftartige Teil (5) durch eine Öffnung (71) des Abdichtelements (7) erstreckt und das Abdichtelement (7) in Längsrichtung (A) des stiftartigen Teils (5) relativ bewegbar zu diesem angeordnet ist.

5. Befestigungsvorrichtung nach Anspruch 4,
**dadurch gekennzeichnet, dass**
das Abdichtelement (7) federbelastet an der Abstützwand (41) anliegt.

6. Befestigungsvorrichtung nach einem der Ansprüche 3 bis 5,
**dadurch gekennzeichnet, dass**
sich das stiftartige Teil (5) bereichsweise in einer Führungshülse (6) erstreckt, an deren Außenseite (61) das Abdichtelement (7) umlaufend und relativ bewegbar zur Führungshülse (6) angeordnet ist.

7. Befestigungsvorrichtung, nach einem der Ansprüche 3 bis 6,
**dadurch gekennzeichnet, dass**
das Abdichtelement (7) scheibenförmig ausgebildet ist und an einer der Fahrzeugkomponente (2) abgewandten Außenseite (41a) der Abstützwand (41) anliegt.

8. Befestigungsvorrichtung nach einem der vorhergehenden Ansprüche,
**dadurch gekennzeichnet, dass**
das Abdichtelement (7) die Aussparung (41 b) vollständig abdeckt.

9. Befestigungsvorrichtung nach einem der vorhergehenden Ansprüche,
**dadurch gekennzeichnet, dass**
die Fahrzeugkomponente ein Abgas führendes Element (2) ist.

10. Befestigungsvorrichtung nach einem der vorhergehenden Ansprüche,
**dadurch gekennzeichnet, dass**
die Abstützwand (41) einer die Fahrzeugkomponente (2) zumindest bereichsweisen abdeckende Wärmeabschirmungseinrichtung (4) zugeordnet ist.

11. Befestigungsvorrichtung nach einem der vorhergehenden Ansprüche,
**dadurch gekennzeichnet, dass**
die Abstützwand (41) fest an der Karosserie (3b) des Fahrzeugs angeordnet ist.

12. Befestigungsvorrichtung nach einem der vorhergehenden Ansprüche,
**dadurch gekennzeichnet, dass**
das Haltelement (9) bereichsweise elastisch ausgebildet ist.

## Claims

1. Fastening device for a vehicle component (2), having a fastening element (5) which is connected to the vehicle component (2), having a holding element (9) and having a supporting wall (41),
**characterized in that**
the fastening element (5) is connected to a holding element (9) which is fixedly arranged on the body, with the fastening element (5) extending through the holding element (9) and the supporting wall (41), which supporting wall (41) is arranged between the holding element (9) and the vehicle component (2) in the longitudinal direction (A) of the fastening element (5), and the supporting wall (41) has a cutout (41b) with a clear width (L) such that the fastening element (5) extends through said cutout (41b) with an air play with respect to an edge region (41c) of said cutout (41b), with the cutout (41b) being dimensioned so as to enable the fastening element (5) to extend through with an edge-side play.

2. Fastening device according to Claim 1, which is arranged so as to be movable, in particular in two spatial directions, relative to the supporting wall (41).

3. Fastening device according to Claim 1 or 2, which has a pin-shaped part, in particular a bolt (5), as a fastening element and has a sealing element (7) which is arranged so as to be movable relative to the pin-shaped part and which bears against the supporting wall (41).

4. Fastening device according to Claim 3,
**characterized in that**
the pin-shaped part (5) extends through an opening (71) of the sealing element (7) and the sealing element (7) is arranged so as to be movable relative to the pin-shaped part (5) in the longitudinal direction (A) thereof.

5. Fastening device according to Claim 4,
**characterized in that**
the sealing element (7) bears against the supporting wall (41) under spring loading.

6. Fastening device according to one of Claims 3 to 5,
**characterized in that**
the pin-shaped part (5) extends in regions in a guide sleeve (6), on the outer side (61) of which the sealing element (7) is arranged in an encircling fashion and so as to be movable relative to the guide sleeve (6).

7. Fastening device according to one of Claims 3 to 6,
**characterized in that**
the sealing element (7) is of disc-shaped design and bears against an outer side (41a), which faces away from the vehicle component (2), of the supporting wall (41).

8. Fastening device according to one of the preceding claims,
**characterized in that**
the sealing element (7) completely covers the cutout (41b).

9. Fastening device according to one of the preceding claims,
**characterized in that**
the vehicle component is an exhaust-gas-conducting element (2).

10. Fastening device according to one of the preceding claims,
**characterized in that**
the supporting wall (41) is assigned to a heat shield device (4) which covers the vehicle component (2) at least in regions.

11. Fastening device according to one of the preceding claims,
**characterized in that**
the supporting wall (41) is fixedly arranged on the body (3b) of the vehicle.

12. Fastening device according to one of the preceding claims,
**characterized in that**
the holding element (9) is of elastic design in regions.

## Revendications

1. Dispositif de fixation pour un composant de véhicule (2), comprenant un élément de fixation (5), qui est connecté au composant de véhicule (2), un élément de retenue (9) et une paroi de support (41),
**caractérisé en ce que**
l'élément de fixation (5) est connecté à un élément de retenue (9) disposé fixement sur la carrosserie, l'élément de fixation (5) s'étendant à travers l'élément de retenue (9) et la paroi de support (41), laquelle paroi de support (41) est disposée dans la direction longitudinale (A) de l'élément de fixation (5) entre l'élément de retenue (9) et le composant de véhicule (2) et la paroi de support (41) présentant un évidement (41b) avec une dimension intérieure (L) telle que l'élément de fixation (5) s'étende à travers elle avec jeu jusqu'à une région de bord (41c) de l'évidement (41b), un dimensionnement de l'évidement (41b) permettant un passage à travers lui de l'élément de fixation (5) avec un jeu marginal.

2. Dispositif de fixation selon la revendication 1, qui est disposé de manière relativement déplaçable, notamment dans deux directions spatiales, par rapport à la paroi de support (41).

3. Dispositif de fixation selon la revendication 1 ou 2, qui présente en tant qu'élément de fixation une partie de type goupille, notamment un boulon (5), et un élément d'étanchéité (7), qui est disposé de manière relativement déplaçable par rapport à la partie de type goupille et qui s'applique contre la paroi de support (41).

4. Dispositif de fixation selon la revendication 3,
**caractérisé en ce que**
la partie de type goupille (5) s'étend à travers une ouverture (71) de l'élément d'étanchéité (7) et l'élément d'étanchéité (7) est disposé de manière relativement déplaçable par rapport à celle-ci dans la direction longitudinale (A) de la partie de type goupille (5).

5. Dispositif de fixation selon la revendication 4,
**caractérisé en ce que**
l'élément d'étanchéité (7) s'applique contre la paroi de support (41) par sollicitation par ressort.

6. Dispositif de fixation selon l'une quelconque des revendications 3 à 5,
**caractérisé en ce que**
la partie de type goupille (5) s'étend en partie dans une douille de guidage (6) sur le côté extérieur (61) de laquelle l'élément d'étanchéité (7) est disposé de manière périphérique et relativement déplaçable par rapport à la douille de guidage (6).

7. Dispositif de fixation selon l'une quelconque des revendications 3 à 6,
**caractérisé en ce que**
l'élément d'étanchéité (7) est réalisé en forme de disque et s'applique contre un côté extérieur (41a) de la paroi de support (41) opposé au composant de véhicule (2).

8. Dispositif de fixation selon l'une quelconque des revendications précédentes,
**caractérisé en ce que**
l'élément d'étanchéité (7) recouvre complètement l'évidement (41b).

9. Dispositif de fixation selon l'une quelconque des revendications précédentes,
**caractérisé en ce que**
le composant de véhicule est un élément (2) guidant les gaz d'échappement.

10. Dispositif de fixation selon l'une quelconque des revendications précédentes,
**caractérisé en ce que**
la paroi de support (41) est associée à un dispositif d'écran thermique (4) recouvrant au moins en partie le composant de véhicule (2).

11. Dispositif de fixation selon l'une quelconque des revendications précédentes,
**caractérisé en ce que**
la paroi de support (41) est disposée fixement sur la carrosserie (3b) du véhicule.

12. Dispositif de fixation selon l'une quelconque des revendications précédentes,
**caractérisé en ce que**
l'élément de retenue (9) est réalisé sous forme élastique par endroits.
